# EUROPEAN PATENT SPECIFICATION

(11) **EP 2 074 346 B1**
(45) Date of publication and mention of the grant of the patent: **05.04.2017**
(21) Application number: 07803739.7
(22) Date of filing: 06.09.2007
(51) Int. Cl.: F16L 59/02, B28B 19/00, F16L 58/10, F16L 59/04

(54) **COATING METHOD AND COATING APPARATUS FOR A MINERAL WOOL PIPE SECTION FOR THERMAL INSULATION OF PIPES**
BESCHICHTUNGSVERFAHREN UND -VORRICHTUNG FÜR EINEN STEINWOLL-RÖHRENABSCHNITT ZUR WÄRMEISOLIERUNG VON RÖHREN
PROCEDE ET APPAREIL DE REVETEMENT POUR UNE SECTION DE TUYAU EN LAINE MINERALE POUR L'ISOLATION THERMIQUE DE TUYAUX

(30) Priority: 28.09.2006 FI 20065604
(43) Date of publication of application: 01.07.2009
(73) Proprietor: Paroc Group Oy, 00180 Helsinki (FI)
(72) Inventor: HJELT, Tuomo, 53850 Lappeenranta (FI); RUMMUKAINEN, Janne, 53400 Lappeenranta (FI); HOLOPAINEN, Veijo, 53850 Lappeenranta (FI); KARJALAINEN, Erkki, 53300 Lappeenranta (FI); PYLKKÖ, Matti, 53920 Lappeenranta (FI); SEPPÄNEN, Esa, 54915 Saimaanharju (FI); KUOKKANEN, Pekka, 53650 Lappeenranta (FI); LAUKKANEN, Pasi, 53850 Lappeenranta (FI)
(74) Representative: LEITZINGER OY
(86) International application number: PCT/FI2007/050476
(87) International publication number: WO 2008/037842

(56) References cited:
- DE-A1- 19 652 731
- DE-A1- 19 941 746
- FR-A1- 2 391 829
- GB-A- 2 212 590
- JP-A- 59 024 519
- US-A- 1 895 022
- US-A- 3 470 057

## Description

The present invention relates to a coating method for a mineral wool pipe section for thermal insulation of pipes constructed as an essentially round tubular body, wherein a coating material is bonded to an external surface of the pipe section by supplying the coating material into a linear contact point or a nip between the coatable pipe section and a heated roll, in which the nip squeezes the coating material against an external surface of the pipe section and a bonding agent contained in the coating material melts, thus adhering to the pipe section's surface, a rotating motion of the pipe section and the roll causing a transfer of the coating material around the pipe section. The invention relates further to a coating apparatus for a pipe section of mineral wool constructed as an essentially round tubular body, comprising a heatable roll against which the coatable pipe section is engageable so as to establish between the pipe section and the heatable roll a press nip; means for supporting the pipe section and bringing it against the heatable roll, means for rotationally driving the pipe section and the roll, and means for supplying a coating material into the nip.

Pipe sections are normally coated with a coating material, featuring an outer surface of aluminium and an inner surface of polyethylene with a reinforcement mesh therebetween. The coating process is normally effected in such a way that a pipe section constructed as an essentially round tubular body is engaged against a heated roll for establishing therebetween a press nip having the coating material supplied therein, the squeezing of the coating material against an external surface of the pipe section taking place in the nip and at the same time the inner surface of polyethylene melts and adheres firmly to the pipe section's surface. In response to a rotating motion of the pipe section and the heatable roll, the coating material transfers around the pipe section by a pulling action of the press nip. The heatable roll has its temperature typically within the range of about 150°C to about 250°C. After being coated, the pipe section is split along a single line of the wall by making therein an incision extending from external to internal surface. A hinge slit extending from the internal surface towards the external surface is formed in the internal surface opposite to the splitting line, which hinge slit allows opening of the pipe section and fitting it around a pipe to be insulated, yet holding the halves of the pipe section together. Once the pipe section has been fitted around a pipe to be insulated, the circumferentially opposing faces of the splitting line of the pipe section are brought to engage each other and the pipe section is fixed in place by means of a two-sided tape, which is disposed on a coating material adjacent to one edge of the splitting line and which extends onto a coating material adjacent to the other edge. One problem with a coated pipe section of this type is a tendency of the pipe section to open up in a circumferential direction along its splitting line, which results from the fact that during a coating operation the heatable roll is pressed against a surface of the pipe section, whereby a cross-sectional shape of the pipe section changes such that the coating will have a length which is shorter than a true circumference of the pipe section. As a result, the coating applies a circumferential strain on the pipe section's surface, whereby, after a pipe section splitting operation, the pipe section endeavours to open up in response to this strain. As such a pipe section is then installed around a pipe to be insulated and fixed in its position, the pipe section is still in a strained condition, the tape holding the pipe section closed thus urging to release. The elimination of this problem has been pursued by sizing the hinge incision of the internal surface on the side opposite to the splitting line in view of providing a reduction of the circumferential strain, but that has not eliminated the problem completely. Document US 1,895,022 discloses a coating method according to the preamble of claim 1.

Accordingly, it is an objective of the present invention to provide an improved coating method, wherein such an opening problem no longer occurs. In order to accomplish this objective, a method of the invention is characterized in that the method comprises squeezing the coating material with the heated roll, whose external surface is formed with ribs extending in a longitudinal direction of the roll and enabling the coating material to sink in within the pipe section. A coating apparatus of the invention, on the other hand, is characterized in that the heatable roll has ribs formed on its surface.

The invention will now be described more closely with reference to the accompanying drawings, in which:

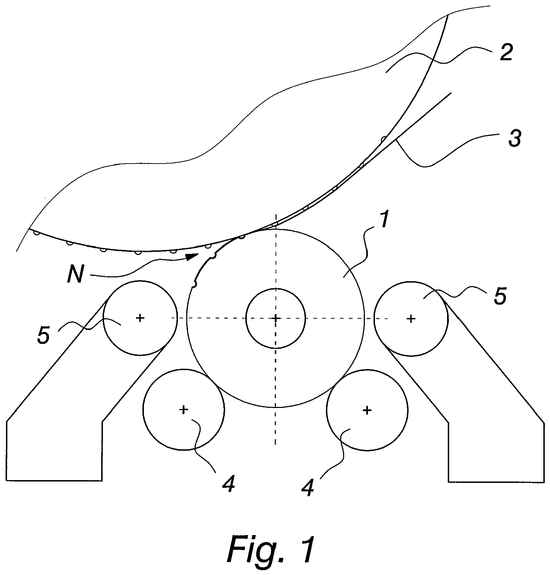

- Fig. 1: shows in a schematic view of principle one coating arrangement according to the invention, and

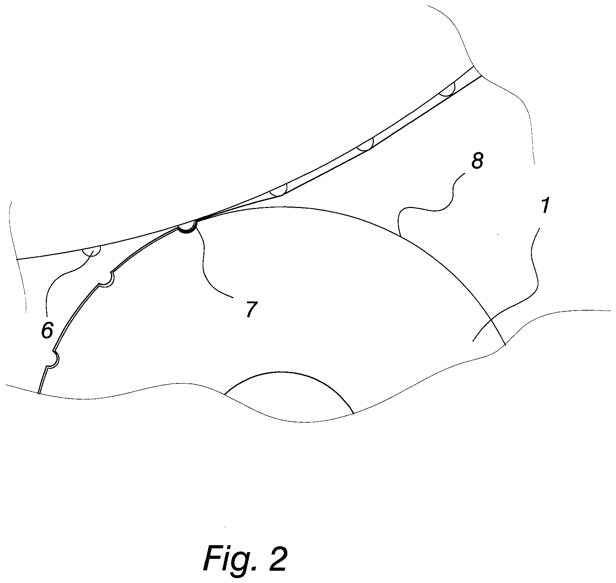

- Fig. 2: shows an enlarged detail from the arrangement of fig. 1.

The arrangement depicted in the figures includes a heatable roll 2 and a tubular pipe section 1 mounted on support rollers 4 and drive rollers 5 which pipe section is engaged against the heatable roll 2 in such a way that a press nip N is established therebetween. A coating material 3 is supplied into this nip by means of elements, not shown, whereby it compresses in the nip against an external surface of the pipe section 1 and is at the same time exposed to a thermal effect of the heated roll, in response to which a polyethylene film present on an inner surface of the coating material melts and adheres firmly to the pipe section's 1 surface. By means of the press nip, the coating material transfers around the pipe section while the roll 2 and the pipe section 1 are rotating. In the solution according to the invention, the heatable roll 2 has its external surface formed with ribs 6, which are preferably disposed at equal intervals, e.g. at intervals within the range of 10-20 mm, preferably at intervals of about 15 mm. The ribs have a height which is preferably within the range of about 1 to about 5 mm, more preferably within the range of about 2-3 mm. The coating material 3 is urged in the press nip by these ribs within the pipe section 1, whereby, after a coating process as the coating is cooling, the coating material is able to stretch in the circumferential direction by rising upwards out of the depressions in the pipe section's surface so as not to apply to the actual pipe section 1 such a circumferential strain that would be sufficient to open up the pipe section. Likewise, after being installed around a pipe to be insulated, the pipe section no longer develops circumferential strains that would cause a release of the fastening tape over time.

## Claims

1. A coating method for a mineral wool pipe section (1) for thermal insulation of pipes constructed as an essentially round tubular body, wherein a coating material (3) is bonded to an external surface of the pipe section (1) by supplying the coating material (3) into a nip (N) between the coatable pipe section (1) and a heated roll (2), in which the nip (N) squeezes the coating material (3) against an external surface (8) of the pipe section (1) and a bonding agent contained in the coating material (3) melts, thus adhering to the pipe section's (1) surface, a rotating motion of the pipe section (1) and the roll (2) causing a transfer of the coating material (3) around the pipe section (1),
**characterized in that** the method comprises squeezing the coating material (3) with the heated roll (2), whose external surface is formed with ribs (6) extending in a longitudinal direction of the heated roll (2) and enabling the coating material (3) to sink in within the pipe section (1).

2. A method as set forth in claim 1, **characterized in that** the ribs (6) are formed by welding on a surface of the heatable roll (2).

3. A method as set forth in claim 1 or 2, **characterized in that** the ribs (6) are about 1-5 mm in height.

4. A method as set forth in claim 3, **characterized in that** the ribs (6) are about 2-3 mm in height.

5. A method as set forth in any of the preceding claims, **characterized in that** the ribs (6) are formed at intervals of about 10-20 mm in a circumferential direction of the heatable roll (2).

6. A coating apparatus for a mineral wool pipe section (1) for thermal insulation of pipes constructed as an essentially round tubular body, comprising a heatable roll (2) against which the coatable pipe section (1) is engageable so as to establish between the pipe section and the heatable roll (2) a press nip (N), means (4, 5) for supporting the pipe section (1) and bringing it against the heatable roll (2), means for rotationally driving the pipe section (1) and the roll (2), and means for supplying a coating material (3) into the nip (N), **characterized in that** the heatable roll (2) has ribs (6) formed on its surface.

7. An apparatus as set forth in claim 6, **characterized in that** the ribs (6) are formed by welding the same to a surface of the heatable roll (2).

8. An apparatus as set forth in claims 6 or 7, **characterized in that** the ribs (6) are about 1-5 mm in height.

9. An apparatus as set forth in claim 8, **characterized in that** the ribs (6) are about 2-3 mm in height.

10. An apparatus as set forth in any of claims 6-9, **characterized in that** the ribs (6) are formed at intervals of about 10-20 mm in a circumferential direction of the heatable roll (2).

## Patentansprüche

1. Beschichtungsverfahren für einen Mineralwolle-Rohrabschnitt (1) zur Wärmeisolierung von Rohren, der als ein im Wesentlichen runder rohrförmiger Körper aufgebaut ist, wobei ein Beschichtungsmaterial (3) an eine äußere Fläche des Rohrabschnitts (1) durch Zufuhr des Beschichtungsmaterials (3) in einen Walzspalt (N) zwischen dem beschichtungsfähigen Rohrabschnitt (1) und einer geheizten Walze (2) gebunden wird, wobei der Walzspalt (N) das Beschichtungsmaterial (3) gegen eine äußere Fläche (8) des Rohrabschnitts (1) drückt und ein Bindemittel, das im Beschichtungsmaterial (3) enthalten ist, schmilzt, wodurch es an der Fläche des Rohrabschnitts (1) haftet, wobei eine Drehbewegung des Rohrabschnitts (1) und der Walze (2) eine Übertragung des Beschichtungsmaterials (3) rund um den Rohrabschnitt (1) bewirkt,
**dadurch gekennzeichnet, dass** das Verfahren das Drücken des Beschichtungsmaterials (3) mit der geheizten Walze (2) umfasst, deren äußere Fläche mit Rippen (6) geformt ist, welche sich in einer Längsrichtung der geheizten Walze (2) erstrecken und ermöglichen, dass das Beschichtungsmaterial (3) in den Rohrabschnitt (1) einsinken kann.

2. Verfahren nach Anspruch 1, **dadurch gekennzeichnet, dass** die Rippen (6) durch Schweißen auf einer Fläche der heizbaren Walze (2) gebildet sind.

3. Verfahren nach Anspruch 1 oder 2, **dadurch gekennzeichnet, dass** die Rippen (6) etwa 1-5 mm hoch sind.

4. Verfahren nach Anspruch 3, **dadurch gekennzeichnet, dass** die Rippen (6) etwa 2-3 mm hoch sind.

5. Verfahren nach einem der vorherigen Ansprüche, **dadurch gekennzeichnet, dass** die Rippen (6) in Abständen von etwa 10-20 mm in Umfangsrichtung der heizbaren Walze (2) geformt sind.

6. Beschichtungsvorrichtung für einen Mineralwolle-Rohrabschnitt (1) zur Wärmedämmung von Rohren, der als im Wesentlichen runder rohrförmiger Körper aufgebaut ist, die eine heizbare Walze (2) umfasst, gegen die der beschichtungsfähige Rohrabschnitt (1) gedrückt werden kann, um so zwischen dem Rohrabschnitt und der heizbaren Walze (2) einen Druckspalt (N) einzurichten, sowie Mittel (4, 5) zum Abstützen des Rohrabschnitts (1) und Andrücken desselben an die heizbare Walze (2), Mittel für den Drehantrieb des Rohrabschnitts (1) und der Walze (2) und Mittel für die Zufuhr eines Beschichtungsmaterials (3) zum Spalt (N), **dadurch gekennzeichnet, dass** die heizbare Walze (2) Rippen (6) hat, die auf ihrer Oberfläche geformt sind.

7. Vorrichtung nach Anspruch 6, **dadurch gekennzeichnet, dass** die Rippen (6) durch Schweißen derselben auf einer Fläche der heizbaren Walze (2) geformt sind.

8. Vorrichtung nach einem der Ansprüche 6 oder 7, **dadurch gekennzeichnet, dass** die Rippen (6) etwa 1-5 mm hoch sind.

9. Vorrichtung nach Anspruch 8, **dadurch gekennzeichnet, dass** die Rippen (6) etwa 2-3 mm hoch sind.

10. Vorrichtung nach einem der Ansprüche 6-9, **dadurch gekennzeichnet, dass** die Rippen (6) in Abständen von etwa 10-20 mm in Umfangsrichtung der heizbaren Walze (2) geformt sind.

## Revendications

1. Procédé de revêtement d'une section de tuyau en laine minérale (1) pour l'isolation thermique de tuyaux construite sous forme d'un corps tubulaire essentiellement rond, dans lequel un matériau de revêtement (3) est collé à une surface externe de la section de tuyau (1) en alimentant le matériau de revêtement (3) dans une zone de pincement (N) entre la section de tuyau à revêtir (1) et un rouleau chauffé (2), dans lequel la zone de pincement (N) écrase le matériau de revêtement (3) contre une surface externe (8) de la section de tuyau (1) et un agent de collage contenu dans le matériau de revêtement (3) fond, le collant ainsi à la surface de la section de tuyau (1), un mouvement de rotation de la section de tuyau (1) et du rouleau (2) provoquant un transfert du matériau de revêtement (3) autour de la section de tuyau (1),
**caractérisé en ce que** le procédé comprend l'écrasement du matériau de revêtement (3) avec le rouleau chauffé (2), dont la surface externe est formée avec des nervures (6) qui s'étendent en direction longitudinale du rouleau chauffé (2) et permettant au matériau de revêtement (3) de s'enfoncer dans la section de tuyau (1).

2. Procédé selon la revendication 1, **caractérisé en ce que** les nervures (6) sont formées par soudage sur une surface du rouleau chauffant (2).

3. Procédé selon la revendication 1 ou 2, **caractérisé en ce que** les nervures (6) ont une hauteur d'environ 1 à 5 mm.

4. Procédé selon la revendication 3, **caractérisé en ce que** les nervures (6) ont une hauteur d'environ 2 à 3 mm.

5. Procédé selon l'une quelconque des revendications précédentes, **caractérisé en ce que** les nervures (6) sont formées à intervalles d'environ 10 à 20 mm en direction circonférentielle du rouleau chauffant (2).

6. Appareil de revêtement d'une section de tuyau en laine minérale (1) pour l'isolation thermique de tuyaux construite sous forme d'un corps tubulaire essentiellement rond, comprenant un rouleau chauffant (2) contre lequel la section de tuyau à revêtir (1) peut être engagé de manière à établir une zone de pincement par compression (N) entre la section de tuyau et le rouleau chauffant (2), un moyen (4, 5) pour supporter la section de tuyau (1) et l'amener contre le rouleau chauffant (2), un moyen d'entraînement rotationnel de la section de tuyau (1) et du rouleau (2), et un moyen d'alimentation d'un matériau de revêtement (3) dans la zone de pincement (N), **caractérisé en ce que** le rouleau chauffant (2) comporte des nervures (6) formées sur sa surface.

7. Appareil selon la revendication 6, **caractérisé en ce que** les nervures (6) sont formées par soudage de celles-ci sur une surface du rouleau chauffant (2).

8. Appareil selon la revendication 6 ou 7, **caractérisé en ce que** les nervures (6) ont une hauteur d'environ 1 à 5 mm.

9. Appareil selon la revendication 8, **caractérisé en ce que** les nervures (6) ont une hauteur d'environ 2 à 3 mm.

10. Appareil selon l'une quelconque des revendications 6 à 9, **caractérisé en ce que** les nervures (6) sont formées à intervalles d'environ 10 à 20 mm en direction circonférentielle du rouleau chauffant (2).
